# EUROPEAN PATENT APPLICATION

(11) **EP 2 905 597 A1**
(43) Date of publication of application: **12.08.2015**
(21) Application number: 13843135.8
(22) Date of filing: 01.10.2013
(51) Int. Cl.: G01M 7/02

(54) **VIBRATION GENERATOR**

(30) Priority: 03.10.2012 JP 2012221358
(71) Applicant: Emic Corporation, Tokyo 141-0031 (JP)
(72) Inventor: ISHITA, Yoshio, Tokyo 141-0031 (JP); HARADA, Kazuya, Tokyo 141-0031 (JP)
(74) Representative: Piésold, Alexander James
(86) International application number: PCT/JP2013/076676
(87) International publication number: WO 2014/054624

(57) **Abstract**

[Problem] The present invention provides a vibration exciter that reduces the overall power consumption of a vibration tester and that is not damaged even if one attempts to increase the excitation force produced by the vibration exciter or to enlarge the exciter.

[Means for Solution] The present invention provides a vibration exciter including a movable unit on which a test object is mounted and a fixed unit that has a flux path element, wherein the flux path element has a magnet and a yoke that has magnetic permeability, and the flux path element is disposed to produce a static magnetic field in a gap in the flux path element, the movable unit has a driving coil and is disposed with the driving coil being inserted in the gap, the vibration exciter is configured to provide a drive current to the driving coil to produce desired vibrations of the movable unit, and wherein the vibration exciter further includes a cooling blower for cooling at least any one of the magnet and the driving coil, a controller for controlling the rate of rotation of the cooling blower, and a temperature gauge for measuring the temperature of at least any one of the magnet and the driving coil, and wherein the controller controls the rate of rotation of the cooling blower, based on the temperature of at least any one of the magnet and the driving coil, the temperature being measured by the temperature gauge.

## Description

### TECHNICAL FIELD

The present invention relates to a vibration exciter for a vibration tester for testing, for example, vibration properties and durability of industrial products such as, for example, aerospace equipment, automotive equipment, electronic products, and precision equipment, and more specifically, to a vibration exciter for a vibration tester, the exciter reducing power consumption using permanent magnet (hereinafter simply referred to as "magnet").

### BACKGROUND ART

Conventionally, a vibration tester has been used in a vibration test to test, for example, vibration properties and durability of industrial products such as, for example, aerospace equipment, automotive equipment, electronic products, and precision equipment.

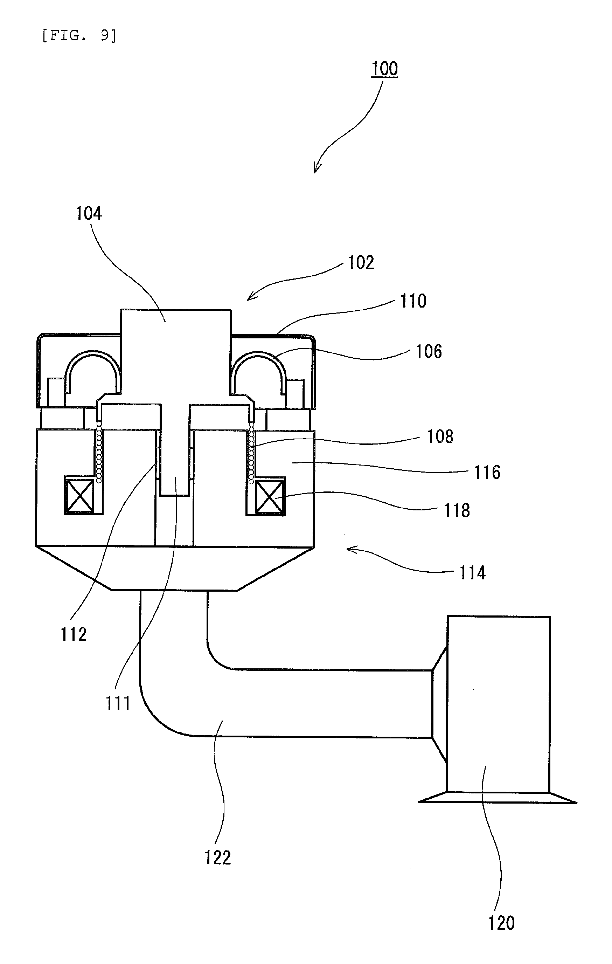

Fig. 9 is a schematic view illustrating the configuration of a vibration exciter in a conventional vibration tester.

The vibration exciter 100 illustrated in Fig. 9 includes a movable unit 102 on which a test object (not illustrated) is mounted, a fixed unit 114 having a flux path element, and a cooling blower 120 for cooling the movable unit 102 and the fixed unit 114.

The fixed unit 114 includes a yoke 116 that is made from, for example, iron and an excitation coil 118 that produces a magnetic flux that flows through the yoke 116.

A constant magnetic flux is caused to flow through the yoke 116 by applying voltage from a constant-voltage source, which is not illustrated, to the excitation coil 118.

The movable unit 102 includes a test table 104 on which a test object (not illustrated) is mounted, a spring 106 for suspending the movable unit, the spring connecting the movable unit 102 with the fixed unit 114 and movably retaining the movable unit 102, and a driving coil 108 that is inserted in a gap in the yoke 116.

The driving coil 108 is disposed perpendicular to the magnetic field (static magnetic field) produced by the excitation coil 118. Delivery of an alternating current to the driving coil 108 allows the movable unit 102 to be vibrated. The magnitude of vibration to be generated (excitation force) can be controlled by varying the magnitude of the alternating current provided to the driving coil 108.

The reference numeral 110 designates a cover for protecting the spring 106 for suspending the movable unit, the reference numeral 111 designates a restraining shaft for axially restraining the movable unit 102, and the reference numeral 112 designates a restraining bearing for axially restraining the movable unit 102.

The vibration exciter 100, which has the above configuration, is cooled by the cooling blower 120 to prevent thermal damage to the excitation coil 118 and the driving coil 108. The reference numeral 122 designates a blower hose that connects the vibration exciter 100 with the cooling blower 120.

However, the amount of heat generated by the excitation coil 118 and the driving coil 108 depends on the magnitude of excitation force and the like, and thus operation of the cooling blower 120 at a constant rotation rate results in unnecessary power consumption.

In view of the foregoing, Patent Document 1 discloses feedback control of the rate of rotation of a cooling blower by monitoring the temperature of an excitation coil and a driving coil to maintain the excitation coil or the driving coil at a desired temperature.

### RELATED ART DOCUMENTS

### Patent Documents

[Patent Document 1] JP-A-2010-276425
[Patent Document 2] JP-A-H08-193911

### SUMMARY OF THE INVENTION

### PROBLEMS TO BE SOLVED BY THE INVENTION

However, if one attempts to increase the excitation force produced by a vibration exciter or to enlarge the exciter, the amount of the current that flows through the excitation coil is increased, and thus the amount of heat generated is also increased, which requires increased rate of rotation of a cooling blower.

Thus, the overall power consumption of the vibration tester may be very high, because the amount of the current that flows through the excitation coil and the amount of the current that flows through the cooling blower are increased. Conventionally, a vibration tester that uses permanent magnet in place of an excitation coil (Patent Document 2) has been developed, but such tester is mainly a small vibration exciter. Permanent magnet has never been used in a large vibration exciter.

Permanent magnet has a thermal property. When the magnet is heated to a temperature higher than a predetermined temperature (Curie temperature), the magnetic moments fluctuate and change direction. This reduces the magnetism of the permanent magnet. Even after cooling below the allowable temperature, the magnetism cannot be recovered.

In a large vibration tester, the vibration exciter is heated to a high temperature only by the current that flows through the driving coil. Thus, it is necessary to insure that the permanent magnet is cooled and protected to produce a desired static magnetic field. Otherwise, the vibration exciter cannot produce a specified excitation force and becomes unusable.

In view of the current situations, an object of the present invention is to provide a vibration exciter for a vibration tester, the exciter being capable of reducing the overall power consumption of the vibration tester and maintaining the ability to produce a desired excitation force even if one attempts to increase the excitation force produced by the vibration exciter or to enlarge the exciter.

### TECHNICAL SOLUTION

The present invention has been developed to solve the problems of the conventional art, as described above. A vibration exciter of the present invention includes a movable unit on which a test object is mounted and a fixed unit that has a flux path element,
wherein the flux path element has a magnet and a yoke that has magnetic permeability, and the flux path element is disposed to produce a static magnetic field in a gap in the flux path element,
the movable unit has a driving coil and is disposed with the driving coil being inserted in the gap,
the vibration exciter is configured to provide a drive current to the driving coil to produce desired vibrations of the movable unit, and
the vibration exciter further includes:
a cooling blower for cooling at least any one of the magnet and the driving coil,
a controller for controlling the rate of rotation of the cooling blower, and
a temperature gauge for measuring the temperature of at least any one of the magnet and the driving coil, and
wherein the controller is configured to control the rate of rotation of the cooling blower, based on the temperature of at least any one of the magnet and the driving coil, the temperature being measured by the temperature gauge.

Preferably, in this aspect, one pole face in the magnet faces a center pole member of the yoke, and the other pole face in the magnet is magnetically coupled and fixed to the internal circumference of a yoke member of the yoke.

In the vibration exciter of the present invention, the controller can make the cooling blower stop when the temperature of at least any one of the magnet and the driving coil, the temperature being measured by the temperature gauge, is lower than a predetermined temperature at which the blower is stopped.

In the vibration exciter of the present invention, the controller calculates the slope of a temperature increase, from the amount of increase, in a predetermined period of time, in the temperature of at least any one of the magnet and the driving coil, the temperature being measured by the temperature gauge.

When the slope of the temperature increase is larger than a predetermined value, the controller can make the cooling blower operate.

In the vibration exciter of the present invention, when the temperature of at least any one of the magnet and the driving coil, the temperature being measured by the temperature gauge, is higher than the predetermined target temperature, the controller can make the cooling blower operate.

Another vibration exciter of the present invention includes a movable unit on which a test object is mounted and a fixed unit that has a flux path element,
wnerein the flux path element has a magnet and a yoke that has magnetic permeability, and the flux path element is disposed to produce a static magnetic field in a gap in the flux path element,
the movable unit has a driving coil and is disposed with the driving coil being inserted in the gap,
the vibration exciter is configured to provide a drive current to the driving coil to produce desired vibrations of the movable unit,
one pole face in the magnet faces a center pole member of the yoke, and the other pole face in the magnet is magnetically coupled and fixed to the internal circumference of a yoke member of the yoke,
a copper ring is individually disposed on the one pole face in the magnet and along the external circumference of the center pole member of the yoke, the pole member facing the pole face, and
wherein the vibration exciter further includes:
a cooling blower for cooling at least any one of the magnet, the driving coil, and the copper ring,
a controller for controlling the rate of rotation of the cooling blower, and
a temperature gauge for measuring the temperature of at least any one of the magnet, the driving coil, and the copper ring, and
wherein the controller is configured to control the rate of rotation of the cooling blower, based on the temperature of at least any one of the magnet, the driving coil, and the copper ring, the temperature being measured by the temperature gauge.

In the vibration exciter of the present invention, the controller can make the cooling blower stop when the temperature of at least any one of the magnet, the driving coil, and the copper ring, the temperature being measured by the temperature gauge, is lower than a predetermined temperature at which the blower is stopped.

In the vibration exciter of the present invention, the controller calculates the slope of a temperature increase, from the amount of increase, in a predetermined period of time, in the temperature of at least any one of the magnet, the driving coil, and the copper ring, the temperature being measured by the temperature gauge.

The controller can make the cooling blower operate when the slope of the temperature increase is larger than a predetermined value.

In the vibration exciter of the present invention, the controller can make the cooling blower operate when the temperature of at least any one of the magnet, the driving coil, and the copper ring, the temperature being measured by the temperature gauge, is higher than a predetermined target temperature.

### ADVANTAGEOUS EFFECTS OF INVENTION

According to the present invention, use of a magnet in place of an excitation coil to produce a static magnetic field eliminates the need of providing excitation current, which can reduce the overall power consumption of a vibration tester.

The use of a magnet eliminates the heat that would be generated when excitation current passed through an excitation coil, which can lower the rate of rotation of a blower and can greatly reduce the overall power consumption of a vibration tester.

According to the present invention, the temperature of the magnet can be monitored. Thus, the magnet is prevented from losing its magnetism, and it becomes easier to increase the excitation force produced by the vibration exciter or to enlarge the exciter.

### BRIEF DESCRIPTION OF DRAWINGS

[FIG. 1] Fig. 1 is a schematic view illustrating the configuration of a vibration exciter according to an embodiment of the present invention.
[FIG. 2] Fig. 2 is a perspective view illustrating the configuration of the flux path element of the vibration exciter of Fig. 1.
[FIG. 3] Fig. 3 is a vertical cross-sectional view of the flux path element of Fig. 2.
[FIG. 4] Fig. 4 is a flowchart illustrating a control process in the vibration exciter of Fig. 1.
[FIG. 5] Fig. 5 is a graph illustrating a relationship between the operating period of the vibration exciter 10 and the temperature of the copper rings 28a and 28b.
[FIG. 6] Fig. 6 is a schematic view illustrating an exemplary variation of the flux path element 12.
[FIG. 7] Fig. 7 is a schematic view illustrating another exemplary variation of the flux path element 12.
[FIG. 8] Fig. 8 is a graph illustrating a relationship between the excitation force and the power consumption of a vibration exciter.
[FIG. 9] Fig. 9 is a schematic view illustrating a configuration of a conventional vibration exciter.

### DESCRIPTION OF EMBODIMENTS

Now, embodiments (and examples) of the present invention are described in more detail with reference to the drawings.

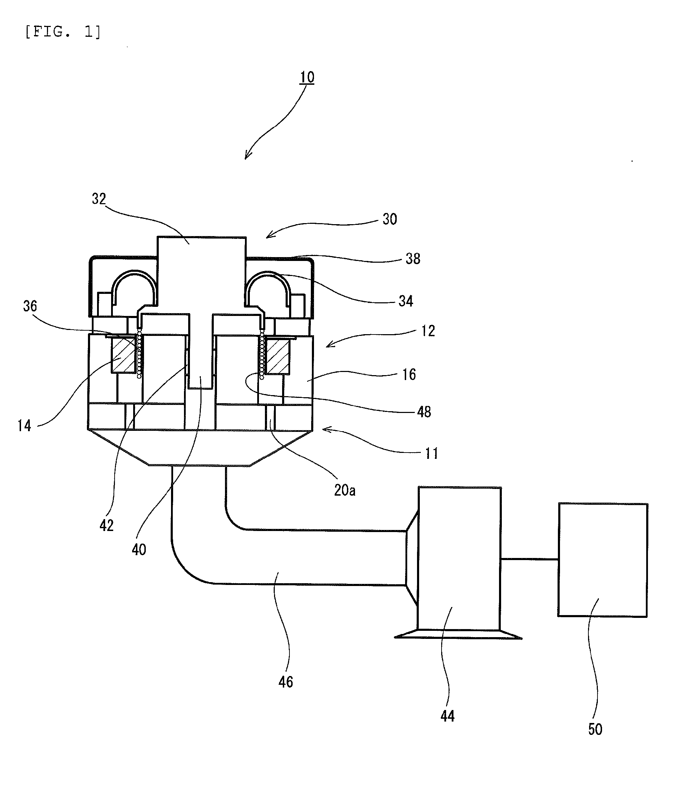

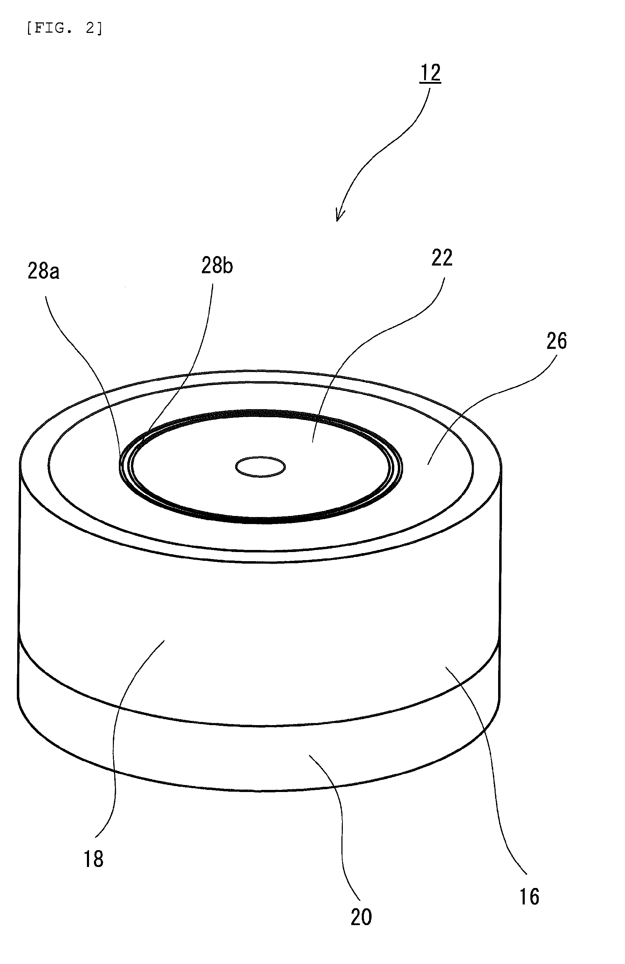

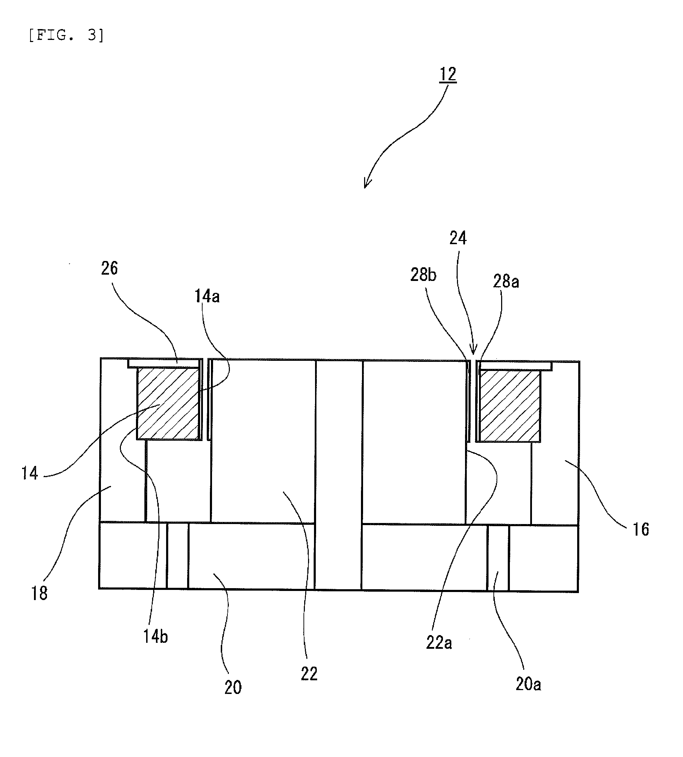

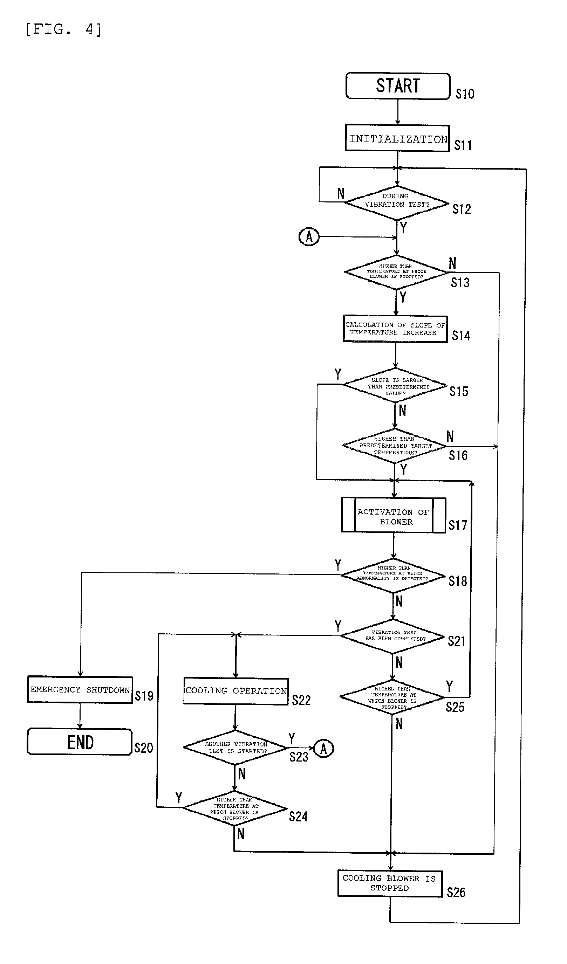

Fig. 1 is a schematic view illustrating the configuration of a vibration exciter according to an embodiment of the present invention. Fig. 2 is a perspective view illustrating the configuration of the flux path element of the vibration exciter of Fig. 1. Fig. 3 is a vertical cross-sectional view of the flux path element of Fig. 2. Fig. 4 is a flowchart illustrating a control process in the vibration exciter of Fig. 1.

As shown in Fig. 1, a vibration exciter 10 according to an embodiment of the present invention includes a fixed unit 11 that has a flux path element 12, a movable unit 30 that has a driving coil 36 that is inserted in a gap 24 in the flux path element 12, a cooling blower 44 for cooling a magnet 14 and the driving coil 36, and a controller 50 for controlling the rate of rotation of the cooling blower 44.

As shown in FIGS. 2 and 3, the flux path element 12 includes, for example, a yoke 16 that is made from, for example, iron and the magnet 14 that produces a magnetic flux that passes through the yoke 16. In the embodiment, the yoke 16 includes a yoke member 18, a bottom plate member 20, and a center pole member 22, as illustrated in Fig. 3.

One pole face 14a in the magnet 14 faces the center pole member 22, and the other pole face 14b in the magnet 14 is magnetically coupled and fixed to the internal circumference of the yoke member 18.

In such configuration, the gap between the one pole face 14a in the magnet 14 and the external circumference 22a of the center pole member 22 forms an air gap (gap 24) in the magnetic circuit that is formed by the magnet 14 and the yoke 16. In the gap 24, static magnetic field is produced.

On the top surface of the magnet 14, a top plate 26 is provided for the purpose of fixing the magnet 14 and reducing leakage of the magnetic flux toward the top of the magnet 14. Copper rings 28a and 28b are respectively provided in the one pole face 14a in the magnet 14 and part of the external circumference 22a of the center pole member 22, the part facing the pole face 14a, for the purpose of reducing fluctuation of the magnetic flux.

In the embodiment, examples of the magnet 14 include, but not limited to, oxide magnets such as ferrite magnets and rare earth magnets such as neodymium magnet.

In the embodiment, the yoke member 18, the bottom plate member 20, and the center pole member 22 are prepared as a separate member and then magnetically coupled and fixed together to form the yoke 16, although the yoke is not limited to such configuration. For example, the bottom plate member 20 and the center pole member 22 may be integrally formed, or the yoke member 18 ad the bottom plate member 20 may be integrally formed. As a matter of course, the yoke member 18, the bottom plate member 20, and the center pole member 22 may be integrally formed as the yoke 16.

In the present specification, even in a case in which the yoke member 18 and the bottom plate member 20 are integrally formed, the bottom plate member 20 and the center pole member 22 are integrally formed, or the yoke member 18, the bottom plate member 20, and the center pole member 22 are integrally formed, they are respectively referred to as the yoke member 18, the bottom plate member 20, and the center pole member 22, for the sake of convenience.

The yoke 16 (the yoke member 18, the bottom plate member 20, and the center pole member 22) may be made up by any material, as long as the material has magnetic permeability. An Example of the material includes iron, especially iron containing a low amount of carbon.

Although the gap between the one pole face 14a in the magnet 14 and the external circumference 22a of the center pole member 22 (gap 24) has any width, as long as a driving coil 32, which is described below, of the movable unit 30 can be inserted in the gap, the energy efficiency can be improved by making the width as small as possible.

The movable unit 30 includes a test table 33 on which a test object (not illustrated) is mounted; a spring 34 for suspending the movable unit, the spring connecting the movable unit 30 with the fixed unit 11 and movably retaining the movable unit 30; and a driving coil 36 that is inserted in the gap 24 in the yoke 16.

The reference numeral 38 designates a cover for protecting the spring 34 for suspending the movable unit. The reference numeral 40 designates a restraining shaft for axially restraining the movable unit 30. The reference numeral 42 designates a restraining bearing for axially restraining the movable unit 30.

To the movable unit 30, a power amplifier, which is not illustrated, is connected such that the current required to apply a desired excitation force to a test object can be provided to the driving coil 36 of the movable unit 30.

The bottom plate member 20 is provided with a through-hole 20a for cooling, and the fixed unit 11 and the cooling blower 44 are connected by a blower hose 46. Such configuration allows cooling of the driving coil 36 and elements around the coil such as the copper rings 28a and 28b and the magnet 14, the coil and the elements being heated to high temperature by current that flows through the driving coil 36.

In the embodiment, the vibration exciter includes a temperature gauge 48 for directly measuring the temperature of the copper rings 28a and 28b. The temperature gauge 48 is connected to a controller 50 and always or periodically sends the temperature of the copper rings 28a and 28b to the controller 50. The controller 50 controls the rate of rotation of the cooling blower 44, based on the temperature of the copper rings 28a and 28b, as described below.

Although, in the embodiment, the temperature gauge 48 is configured to directly measure the temperature of the copper rings 28a and 28b, in view of protection of the magnet 14, the temperature gauge 48 may be configured to directly measure the temperature of the magnet 14.

For the purpose of protecting the driving coil 36, the temperature gauge 48 may be configured to directly measure the temperature of the driving coil 36. As a matter of course, the temperature gauge 48 may be configured to directly measure the temperature of all of the copper rings 28a and 28b and the driving coil 36.

The temperature gauge 48 may also be configured to measure the temperature of the air discharged from the vibration exciter 10 by the cooling blower 44 to indirectly measure the temperature of the copper rings 28a and 28b and the driving coil 36.

The temperature gauge 48 may be configured to measure the temperature of the copper rings 28a and 28b to indirectly measure the temperature of the driving coil 36.

In a case in which the temperature gauge 48 is configured to measure the temperature of the discharged air to indirectly measure the temperature of the copper rings 28a and 28b and the driving coil 36, it is necessary to, for example, previously determine a relationship between the temperature of the discharged air and the temperature of the copper rings 28a and 28b and the driving coil 36. In a case in which the temperature gauge 48 is configured to measure the temperature of the copper rings 28a and 28b to indirectly measure the temperature of the driving coil 36, similar approaches are used.

Now, the operation of the controller 50 will be described with reference to a flowchart illustrated in Fig. 4.

The temperature gauge 48 starts measuring the temperature of the copper rings 28a and 28b simultaneously with activation of the vibration exciter 10. And the controller 50 starts controlling the cooling blower 44, based on the temperature measured (S10).

Before a vibration test is started by using the vibration exciter 10 (S12), the controller 50 performs initialization (S11), and a target temperature of the copper rings 28a and 28b is set. The target temperature can be set as needed, depending on, for example, the Curie temperature and the material of the magnet 14 and the size of the vibration exciter 10.

Next, the temperature gauge 48 measures the temperature of the copper rings 28a and 28b. Then, the temperature of the copper rings 28a and 28b is compared with a predetermined temperature (hereinafter referred to as "temperature at which the blower is stopped") that is lower than the target temperature (S13). When the temperature of the copper rings 28a and 28b is lower than the temperature at which the blower is stopped, the cooling blower 44 is stopped (S26).

When the temperature of the copper rings 28a and 28b is higher than the temperature at which the blower is stopped, the controller 50 calculates the slope of a temperature increase, from the amount of increase, in a predetermined period of time, in the temperature (S14). When the slope of the temperature increase is larger than a predetermined value (S15), the cooling blower 44 is activated (S17).

When the slope of the temperature increase is smaller than the predetermined value, the temperature of the copper rings 28a and 28b is compared with the target temperature (S16). When the temperature of the copper rings 28a and 28b is lower than the target temperature, the cooling blower 44 is stopped (S26).

When the temperature of the copper rings 28a and 28b is higher than the target temperature, the cooling blower 44 is activated (S17).

Next, the temperature of the copper rings 28a and 28b is compared with a predetermined temperature that is higher than the predetermined target temperature (hereinafter referred to as "temperature at which an abnormality is detected") (S18).

When the temperature of the copper rings 28a and 28b is higher than the temperature at which an abnormality is detected, the vibration exciter 10 is shut down immediately (S19), and the control of the cooling blower 44 is also terminated (S20).

Then, the controller determines if the vibration test has been completed (S21). When the vibration test has been completed, the cooling blower 44 continues cooling until the temperature of the copper rings 28a and 28b is lower than the temperature at which the blower is stopped (S22-S24).

When another vibration test is started (S23) during cooling the copper rings 28a and 28b, the flow is returned to S13 to control the cooling blower 44 in the same manner.

When the temperature of the copper rings 28a and 28b is lower than the temperature at which the blower is stopped, the cooling blower 44 is stopped (S26).

When in S20, the controller determines that the vibration test is continued, the temperature of the copper rings 28a and 28b is compared with the temperature at which the blower is stopped (S25). When the temperature of the copper rings 28a and 28b is higher than the temperature at which the blower is stopped, the flow is returned to S17 to continue to operate the cooling blower 44. When the temperature of the copper rings 28a and 28b is lower than the temperature at which the blower is stopped, the cooling blower 44 is stopped (S26).

Then, the flow is returned to S12 to continue the control process. When the temperature of the copper rings 28a and 28b is higher than the temperature at which the blower is stopped, the controller controls the cooling blower 44 as in the steps described above in order to cool the copper rings 28a and 28b.

The rate of rotation of the cooling blower 44 can be controlled based on the temperature of the copper rings 28a and 28b, as described below.

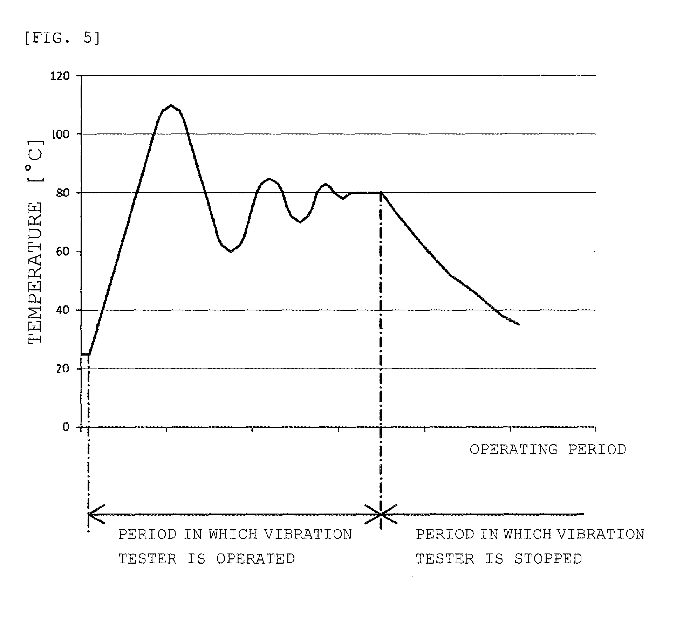

Fig. 5 is a graph illustrating a relationship between the operating period of the vibration exciter 10 and the temperature of the copper rings 28a and 28b.

As shown in Fig. 5, when the temperature of the copper rings 28a and 28b exceeds the target temperature, the rate of rotation of the cooling blower 44 is increased depending on the difference between the temperature of the copper rings 28a and 28b and the target temperature.

When the temperature of the copper rings 28a and 28b falls below the target temperature, the rate of rotation of the cooling blower 44 is decreased depending on the difference between the temperature of the copper rings 28a and 28b and the target temperature.

Control of the rate of rotation of the cooling blower 44 as described above allows control of the cooling operation to maintain the copper rings 28a and 28b at a temperature lower than the target temperature.

Although, in the embodiment, the rate of rotation of the cooling blower 44 is controlled based on the temperature of the copper rings 28a and 28b, in a case in which, for example, the temperature of the driving coil 36 is measured, the rate of rotation of the cooling blower 44 can be controlled based on the temperature of the driving coil 36.

In a case in which both of the temperature of the copper rings 28a and 28b and the temperature of the driving coil 36 are measured, the rate of rotation of the cooling blower 44 can be controlled based on either the temperature of the copper rings 28a and 28b or the temperature of the driving coil 36, which is higher.

Preferred embodiments of the present invention have been described, although the present invention is not limited thereto. For example, in an embodiment described above, the one pole face 14a in the magnet 14 faces the center pole member 22, and the other pole face 14b in the magnet 14 is magnetically coupled and fixed to the internal circumference of the yoke member 18, although the arrangement of the magnet 14 is not limited thereto.

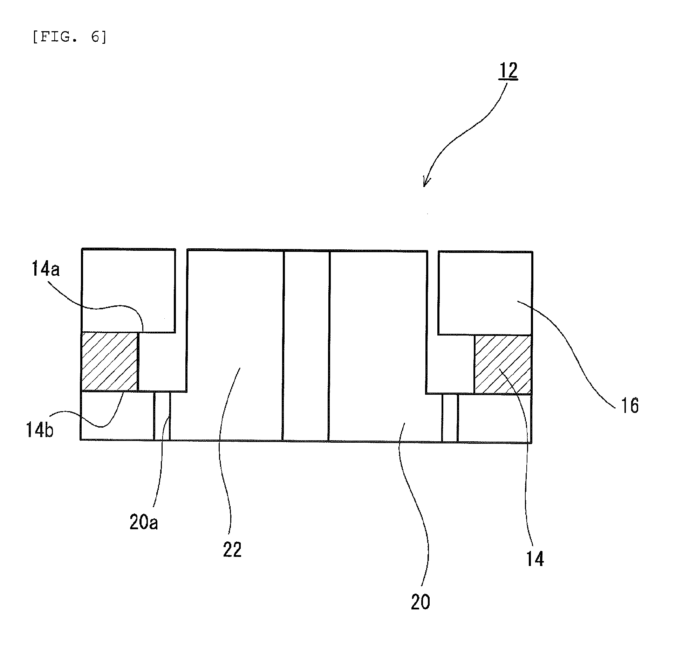

Fig. 6 is a schematic view illustrating an exemplary variation of the flux path element 12. In the variation of the flux path element 12, the one pole face 14a in the magnet 14 is magnetically coupled and fixed to the yoke member 18, and the other pole face 14b in the magnet 14 is magnetically coupled and fixed to the bottom plate member 20.

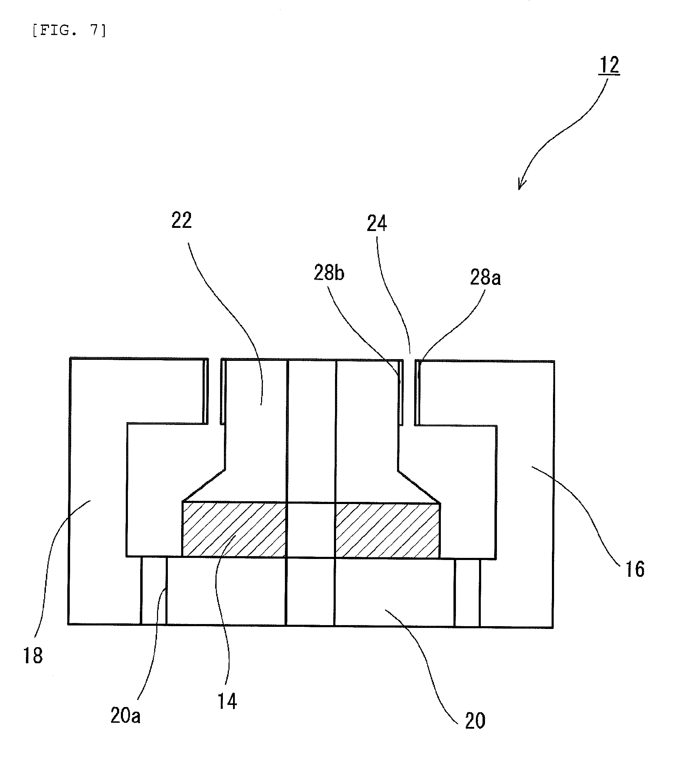

Fig. 7 is a schematic view illustrating another exemplary variation of the flux path element 12. In the variation of the flux path element 12, the yoke member 18 and the bottom plate member 20 are integrally formed, and the magnet 14 is disposed between the bottom plate member 20 and the center pole member 22.

Even in a case in which the flux path element 12 is configured as illustrated in Fig. 6 and Fig. 7, a magnetic flux is passed through the flux path element 12, and a static magnetic field is produced in the gap 24. Thus, various modifications can be made without departing from the objects of the present invention.

### Examples

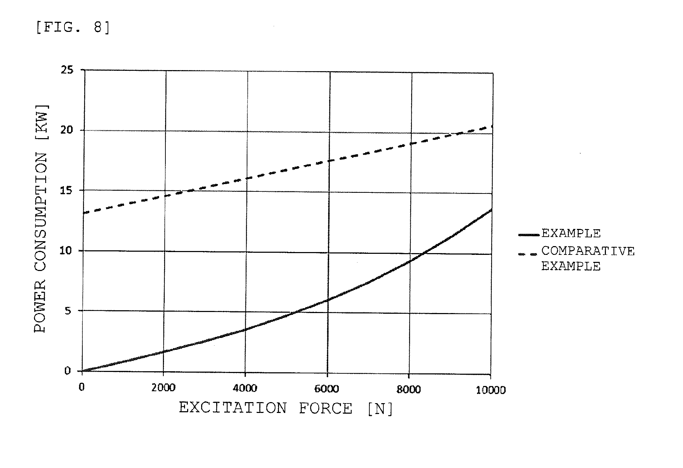

Fig. 8 is a graph illustrating a relationship between the excitation force and the power consumption of vibration exciters.

In the graph of Fig. 8, the curve as an example illustrates a relationship between the excitation force [N] and the power consumption [kW] (the total of the power consumption of the driving coil 36 and the power consumption of the cooling blower 44) of the vibration exciter 10 as illustrated in the embodiments described above.

In the graph of Fig. 8, the curve as a comparative example illustrates a relationship between the excitation force [N] and the power consumption [kW] (the total of the power consumption of the excitation coil 118, the power consumption of the driving coil 108, and the power consumption of the cooling blower) of the vibration exciter 100, which is an example of a conventional vibration exciter.

It is clear from Fig. 8 that the vibration exciter of the present invention can greatly reduce power consumption, compared with conventional vibration exciters.

### DESCRIPTION OF SYMBOLS

- 10: vibration exciter
- 11: fixed unit
- 12: flux path element
- 14: magnet
- 14a: one pole face
- 14b: the other pole face
- 16: yoke
- 18: yoke member
- 20: bottom plate member
- 20a: through-hole
- 22: center pole member
- 22a: external circumference
- 24: gap
- 26: top plate
- 28a, 28b: copper ring
- 30: movable unit
- 32: driving coil
- 33: test table
- 34: spring for suspending movable unit
- 36: driving coil
- 38: cover
- 40: restraining shaft
- 42: restraining bearing
- 44: cooling blower
- 46: blower hose
- 48: temperature gauge
- 50: controller
- 100: vibration exciter
- 102: movable unit
- 104: test table
- 106: spring for suspending movable unit
- 108: driving coil
- 110: cover
- 111: restraining shaft
- 112: restraining bearing
- 114: fixed unit
- 116: yoke
- 118: excitation coil
- 120: cooling blower
- 122: blower hose

## Claims

1. A vibration exciter comprising a movable unit on which a test object is mounted and a fixed unit that has a flux path element,
wherein the flux path element has a magnet and a yoke that has magnetic permeability, and the flux path element is disposed to produce a static magnetic field in a gap in the flux path element,
the movable unit has a driving coil and is disposed with the driving coil being inserted in the gap,
the vibration exciter is configured to provide a drive current to the driving coil to produce desired vibrations of the movable unit, and
the vibration exciter further comprises:
a cooling blower for cooling at least any one of the magnet and the driving coil,
a controller for controlling the rate of rotation of the cooling blower, and
a temperature gauge for measuring the temperature of at least any one of the magnet and the driving coil, and
wherein the controller is configured to control the rate of rotation of the cooling blower, based on the temperature of at least any one of the magnet and the driving coil, the temperature being measured by the temperature gauge.

2. The vibration exciter according to claim 1, wherein one pole face in the magnet faces a center pole member of the yoke, and the other pole face in the magnet is magnetically coupled and fixed to the internal circumference of a yoke member of the yoke.

3. The vibration exciter according to claim 1 or 2, wherein the controller makes the cooling blower stop when the temperature of at least any one of the magnet and the driving coil, the temperature being measured by the temperature gauge, is lower than a predetermined temperature at which the blower is stopped.

4. The vibration exciter according to any one of claims 1-3, wherein the controller calculates the slope of a temperature increase, from the amount of increase, in a predetermined period of time, in the temperature of at least any one of the magnet and the driving coil, the temperature being measured by the temperature gauge, and
wherein the controller makes the cooling blower operate when the slope of the temperature increase is larger than a predetermined value.

5. The vibration exciter according to any one of claims 1-4, wherein the controller makes the cooling blower operate when the temperature of at least any one of the magnet and the driving coil, the temperature being measured by the temperature gauge, is higher than a predetermined target temperature.

6. A vibration exciter comprising a movable unit on which a test object is mounted and a fixed unit that has a flux path element,
wherein the flux path element has a magnet and a yoke that has magnetic permeability, and the flux path element is disposed to produce a static magnetic field in a gap in the flux path element,
the movable unit has a driving coil and is disposed with the driving coil being inserted in the gap,
the vibration exciter is configured to provide a drive current to the driving coil to produce desired vibrations of the movable unit,
one pole face in the magnet faces a center pole member of the yoke, and the other pole face in the magnet is magnetically coupled and fixed to the internal circumference of a yoke member of the yoke,
a copper ring is individually disposed on the one pole face in the magnet and along the external circumference of the center pole member of the yoke, the pole member facing the pole face, and
wherein the vibration exciter further comprises:
a cooling blower for cooling at least any one of the magnet, the driving coil, and the copper rings,
a controller for controlling the rate of rotation of the cooling blower, and
a temperature gauge for measuring the temperature of at least any one of the magnet, the driving coil, and the copper rings, and
wherein the controller is configured to control the rate of rotation of the cooling blower, based on the temperature of at least any one of the magnet, the driving coil, and the copper rings, the temperature being measured by the temperature gauge.

7. The vibration exciter according to claim 6, wherein the controller makes the cooling blower stop when the temperature of at least any one of the magnet, the driving coil, and the copper rings, the temperature being measured by the temperature gauge, is lower than a predetermined temperature at which the blower is stopped.

8. The vibration exciter according to claim 6 or 7, wherein the controller calculates the slope of a temperature increase, from the amount of increase, in a predetermined period of time, in the temperature of at least any one of the magnet, the driving coil, and the copper rings, the temperature being measured by the temperature gauge, and
wherein the controller makes the cooling blower operate when the slope of the temperature increase is larger than a predetermined value.

9. The vibration exciter according to any one of claims 6-8, wherein the controller makes the cooling blower operate when the temperature of at least any one of the magnet, the driving coil, and the copper rings, the temperature being measured by the temperature gauge, is higher than a predetermined target temperature.
